# EUROPÄISCHE PATENTANMELDUNG

(11) **EP 1 767 390 A2**
(43) Veröffentlichungstag der Anmeldung: **28.03.2007**
(21) Anmeldenummer: 06019763.9
(22) Anmeldetag: 21.09.2006
(51) Int. Cl.: B60J 7/12

(54) **Faltverdeck eines Kraftfahrzeugs**

(30) Priorität: 21.09.2005 DE 102005045213
(71) Anmelder: Webasto AG, 82131 Stockdorf (DE)
(72) Erfinder: Biecker, Peter, 82041 Oberhaching (DE); Schütt, Thomas, 82256 Fürstenfeldbruck (DE)

(57) **Zusammenfassung**

Die Erfindung betrifft ein Faltverdeck für Kraftfahrzeuge mit einem an der Karosserie schwenkbar gelagerten Verdeckgestänge (2), das beidseits jeweils mehrere miteinander gelenkig verbundene seitliche Gestängeteile (9, 12, 15) und daran angebrachte Dichtungssegmente (3, 4, 5) aufweist, wobei zumindest ein Dichtungssegment (4) an einem Gestängeteil (15) bewegbar gelagert und beim Verstellen des Faltverdecks zwischen der Schließstellung und der Ablagestellung relativ zu dem Gestängeteil (15) verstellbar ist, wobei erfindungsgemäß vorgesehen ist, dass das Dichtungssegment (4) mittels eines räumlichen Koppelgetriebes (16, 26, 28, 29) an dem Gestängeteil (15) bewegbar gelagert ist und bezüglich des Gestängeteils (15) eine dreidimensionale Bewegung ausführt.

## Beschreibung

Die Erfindung betrifft ein Faltverdeck für Kraftfahrzeuge mit einem an der Karosserie schwenkbar gelagerten Verdeckgestänge, das beidseits jeweils mehrere miteinander gelenkig verbundene seitliche Gestängeteile und daran angebrachte Dichtungssegmente aufweist, wobei zumindest ein Dichtungssegment an einem Gestängeteil bewegbar gelagert und beim Verstellen des Faltverdecks zwischen der Schließstellung und der Ablagestellung relativ zu dem Gestängeteil verstellbar ist.

Bei modernen Falt- oder Klappdächern von Cabriolets werden hohe Anforderungen an eine möglichst geringe Baugröße des abgelegten Daches gestellt. Dazu ist es häufig nötig, einzelne Teile des Daches wie insbesondere seitliche Dichtungssegmente an dem Gestänge des Daches bewegbar zu lagern und beim Ablegen des Daches in bestimmte platzsparende Positionen zu bringen.

Aus der DE 43 44 373 C1 ist eine Dichtrahmenanordnung an seitlichen Gestellgliedern eines Faltverdecks, eines Klappdaches oder dergleichen insbesondere für ein Cabriolet oder einen Roadster bekannt geworden. An einer das Verdeck ablegbar lagernden Verdecksäule, an einem daran schwenkbar angelenkten hinteren Dachrahmenteil sowie an einem am hinteren Dachrahmenteil schwenkbar angelenkten vorderen Dachrahmenteil ist seitlich jeweils eine Dichtschiene angebracht. Die Dichtschiene des hinteren Dachrahmenteils ist an diesem in Längsrichtung verschiebebeweglich-angebracht und durch eine Federeinrichtung nach vome gegen das vordere Dachrahmenteil vorgespannt. Beim Öffnen des Verdecks bzw. Daches schwenkt das vordere Dachrahmenteil nach oben und ermöglicht der Dichtschiene eine nach vorne gerichtete Verschiebebewegung, so dass sich eine Stoßfuge zwischen der verschiebbar gelagerten Dichtschiene des hinteren Dachrahmenteils und der an der Verdecksäule fest angebrachten hinteren Dichtschiene öffnen kann, bevor auch das hintere Dachrahmenteil gegenüber der Verdecksäule verschwenkt wird. Beim Ablegen des Daches verändert sich somit die Längsposition der bewegbaren Dichtschiene gegenüber dem hinteren Dachrahmenteil, in Seiten- oder Querrichtung ändert sich die Position der Dichtschiene relativ zum Dachrahmenteil nicht.

Aus der DE 100 51 436 B4 ist eine Dichtungsvorrichtung an einem versenkbaren Dachteil eines Cabriolets bekannt geworden, die eine um eine Schwenkachse schwenkbar gelagerte Dichtung aufweist, wobei die Schwenkachse in etwa entlang eines abzudichtenden Randes des Dachteils verläuft. Die Dichtung führt somit lediglich eine Rotationsbewegung um die Längskante des Dachteils aus, an dem sie gelagert ist.

Aus der DE 101 60 240 A1 ist ein Faltverdeck bekannt geworden, bei dem ein Dichtungsträger an einem mittleren Rahmenteil des Verdeckgestänges gelenkig gelagert ist und beim Ablegen des Faltverdecks mit seinem Vorderende in Querrichtung insbesondere auswärts schwenkt. Bei der verwendeten Gelenklagerung des Dichtungsträgers ist eine hohe Präzision erforderlich, um eine definierte Bewegung ohne Spiel zu ermöglichen.

Aus der DE 199 34 892 C1 ist ein verstellbares Faltdach bekannt geworden, das ein an einem Dichtungsrahmen angebrachtes Dichtungselement aufweist. Der Dichtungsrahmen ist mittels Führungsstiften an Führungskulissen eines das Faltverdeck an der Karosserie bewegbar lagernden Hauptbügels entlang dem Hauptbügel verschiebbar gelagert.

Aus der DE 40 41 176 A1 ist eine gattungsgemäße Dichtungseinrichtung für ein Faltverdeck eines Fahrzeuges bekannt geworden, bei der ein Dichtelement bei geschlossenem Faltverdeck an einem Randbereich einer geschlossenen Seitenscheibe abdichtend anliegt. Beim Öffnen des Faltverdecks verlagert eine Verstelleinrichtung einen seitlichen äußeren Randbereich bzw. einen Außenbereich des Dichtelements seitlich nach innen. Auf diese Weise wird der durch das geöffnete Faltverdeck erforderliche Stauraum seitlich verringert. Die seitliche Verlagerung des Außenbereichs erfolgt durch Verschwenken der hinteren Halteschiene, an der das Dichtelement befestigt ist, um eine Längsachse gegenüber einer Hauptsäule. Auf diese Weise wird das Dichtelement an seinem von der Schwenk- bzw. Längsachse entfernten Außenbereich maximal nach innen verlagert, während im Bereich der Schwenk- bzw. Längsachse keine oder nahezu keine Verlagerung auftritt.

Der Erfindung liegt die Aufgabe zugrunde, ein eingangs genanntes Faltverdeck zu schaffen, bei dem ein Dichtungssegment mittels einer einfachen und betriebssicheren Lagerung zum Erzielen einer optimierten Stellung bei abgelegtem Verdeck verstellbar ist.

Die Aufgabe wird bei dem oben genannten Faltverdeck erfindungsgemäß dadurch gelöst, dass das Dichtungssegment mittels eines räumlichen Koppelgetriebes an dem Gestängeteil bewegbar gelagert und bezüglich des Gestängeteils in einer dreidimensionalen Bewegung geführt ist. Die Lagerung mittels eines räumlichen Koppelgetriebes ermöglicht die Einbindung des Dichtungssegments in die Lenkeranordnung des Verdeckgestänges mit wenigen Bauteilen, so dass kein zusätzliches Kugelgelenk oder dergleichen aufwendige Gelenkmechanik erforderlich sind, um das Dichtungssegment in der gewünschten Weise zu lagern und zu verstellen. Damit kann eine kontinuierliche und von der Bewegung des Verdeckgestänges gesteuerte dreidimensionale Verstellbewegung des Dichtungssegments sowohl in Richtung der Fahrzeuglängsachse und der Fahrzeughochachse wie auch um eine senkrechte Fahrzeugachse erzielt werden.

Vorteilhafte Ausgestaltungen der Erfindung sind in den Unteransprüchen angegeben.

Vorzugsweise ist das räumliche Koppelgetriebe als Viergelenk gebildet, jedoch kann auch ein anderes Mehrgelenk verwendet werden.

In einer bevorzugten Gestaltung enthält das räumliche Koppelgetriebe bzw. das Viergelenk zur Lagerung des Dichtungssegments zwei Lenker und einer der Lenker ist ein beim Verschwenken des Faltverdecks bewegter Lenker des Verdeckgestänges. Damit erfolgt die Verstellung des Dichtungssegments synchron mit der Verstellung des Lenkers bzw. des Verdeckgestänges ohne zusätzliche Antriebseinrichtung.

Für eine optimierte Verstellbewegung kann insbesondere ein Hinterende des Dichtungselements beim Ablegen des Faltverdecks eine einwärts gegen das Gestängeteil gerichtete Bewegung ausführen. Jedoch kann auch das Vorderende des Dichtungssegments die einwärts gegen das Gestängeteil gerichtete Bewegung, d. h. die Bewegung um eine senkrechte Achse, ausführen. Grundsätzlich sind beliebige kombinierte Verstellbewegungen möglich

Bei einem bevorzugten Faltverdeck ist das Dichtungselement ein mittleres Dichtungselement an einem jeweils drei seitliche Dichtungselemente aufweisenden Verdeckgestänge Jedoch kann auch jedes andere Dichtungssegment durch ein räumliches Koppelgetriebe gelagert und verstellbar sein.

Des weiteren kann auch das hintere Dichtungselement an einer Hauptsäule des Verdeckgestänges bewegbar gelagert sein, um eine optimierte Ablageposition einzunehmen.

Zweckmäßigerweise enthält jedes Dichtungselement einen Dichtungsträger mit einem daran gelagerten Dichtprofil. Der Dichtungsträger ist das steife Element, an dem die Gelenke oder Lagerungen angeordnet sind.

Nachfolgend wird das Faltverdeck anhand eines Ausführungsbeispiels unter Bezugnahme auf die Zeichnung näher erläutert. Es zeigt:
- Fig. 1: in einer perspektivischen Seitenansicht ein Verdeckgestänge eines Faltverdecks eines Cabriolets in geschlossener Stellung;
- Fig. 2: in einer perspektivischen Seitenansicht das Verdeckgestänge während des Öffnungsvorganges des Faltverdecks;

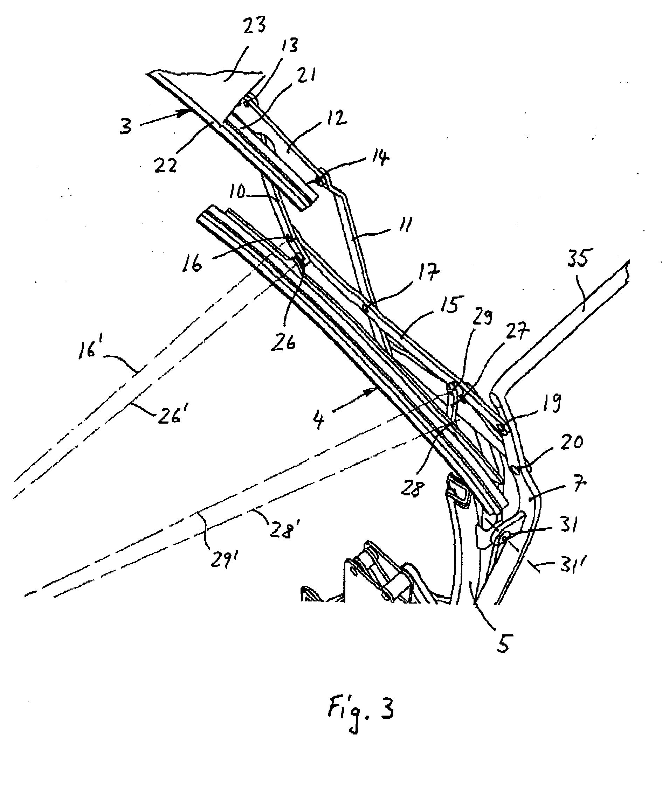

- Fig. 3: in einer Seitenansicht in schematischer Teildarstellung das geöffnete und abgelegte Faltverdeck;
- Fig. 4: in einer Seitenansicht das Verdeckgestänge des geöffneten, abgelegten Faltverdecks; und
- Fig. 5: in einer Rückansicht das Verdeckgestänge in der Stellung gemäß Fig.4.

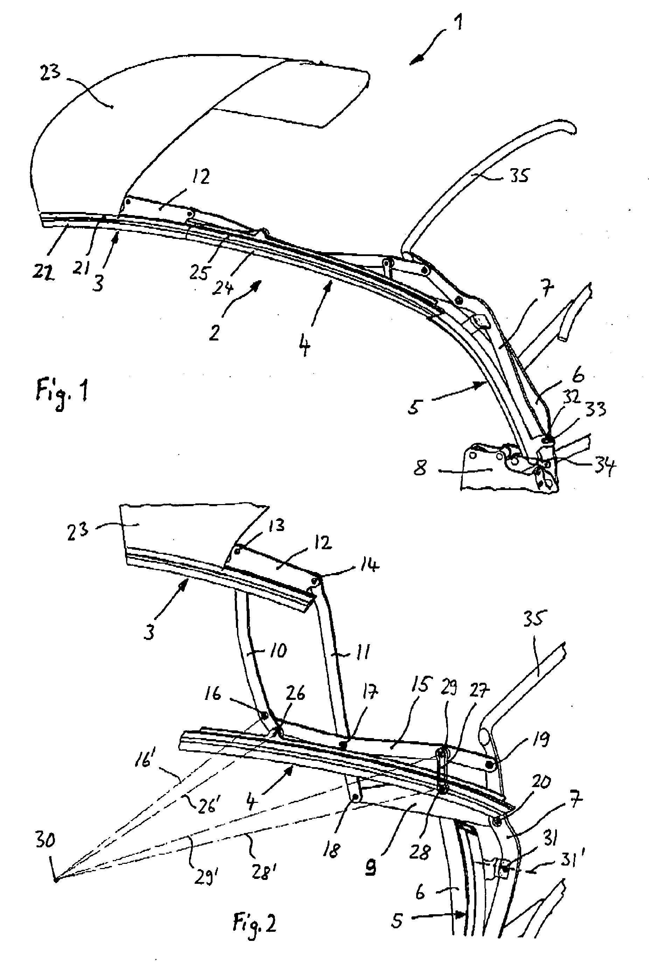

Ein Faltverdeck 1 eines Kraftfahrzeugs weist ein Verdeckgestänge 2 (siehe Fig. 1 und 2) und einen vom Verdeckgestänge 2 gehaltenen Verdeckstoff (nicht dargestellt) auf. Das Verdeckgestänge 2 ist symmetrisch zu einer vertikalen Fahrzeuglängsmittelebene aufgebaut und trägt auf beiden Seiten jeweils ein vorderes Dichtungssegment 3, ein mittleres Dichtungssegment 4 und eine hinteres Dichtungssegment 5, die in der in Fig. 1 dargestellten Schließstellung des Faltverdecks 1 im wesentlichen entlang eines Oberrandes der zumindest einen Seitenscheibe des Fahrzeugs durchgehend verlaufen und das Faltverdeck 1 an der bzw. den Seitenscheiben abdichten.

Ein Hauptviergelenk des Verdeckgestänges 2 enthält einen Hauptlenker 6 und eine Hauptsäule 7, die einerseits an einem Hauptlager 8 der Karosserie und andererseits an einem mittleren Dachrahmenteil 9 des Verdeckgestänges 2 angelenkt sind.

Ein vorderer Hilfslenker 10 und ein hinterer Hilfslenker 11 eines Hiffsviergelenks lagern ein vorderes Dachrahmenteil 12 in Gelenken 13 bzw. 14 und sind andererseits an einem Steuerlenker 15 in Gelenken 16 bzw. 17 angelenkt. Der hintere Hilfslenker 11 ist über das Gelenk 17 hinaus verlängert und am Vorderende des mittleren Dachrahmenteils 9 in einem Gelenk 18 schwenkbar gelagert. Der Steuerlenker 15 ist an seinem Hinterende in einem Gelenk 19 an einer Verlängerung der Hauptsäule 7 schwenkbar gelagert, die sich über das die Anlenkung der Hauptsäule 7 am mittleren Dachrahmenteil 9 bildende Gelenk 20 hinaus erstreckt.

Das vordere Dichtungssegment 3 enthält einen Dichtungsträger 21 und ein daran befestigtes elastisches Dichtprofil 22. Der Dichtungsträger 21, der z. B. im Querschnitt U-förmig gebildet ist und in den das Dichtprofil 22 eingesteckt ist, ist an dem vorderen Dachrahmenteil 12 fest angebracht. Ein von einem flächigen Frontspriegel gebildetes Dachvorderteil 23 ist seitlich an dem Dichtungsträger 22 des vorderen Dichtungssegments 3 oder am vorderen Dachrahmenteil 12 befestigt.

Das mittlere Dichtungssegment 4 ist über seinen das Dichtprofil 24 haltenden Dichtungsträger 25 vorderseitig in einem Gelenk 26 an einer Verlängerung des vorderen Hilfslenkers 10, die über das Gelenk 16 nach hinten bzw. unten hinausreicht, und rückseitig mittels einer Schwinge 27, die in einem Gelenk 28 am Dichtungssegment 4 und einem Gelenk 29 an dem Steuerlenker 15 gelagert ist, bewegbar gelagert.

Die Lagerung des mittleren Dichtungssegments 4 ist als räumliches Koppelgetriebe gebildet, das in Gestalt eines Viergelenks den Steuerlenker 15 als Basis sowie den vorderen Hilfslenker 10 und die Schwinge 27 aufweist. Die Schwenkachsen 16', 26', 28' und 29' der jeweiligen Gelenke 16, 26, 28 und 29 des Viergelenks bzw. des Koppelgetriebes stehen in geeigneter Weise zueinander schräg und schneiden sich z. B. in einem Punkt 30 seitlich außerhalb neben dem mittleren Dichtungssegment 4.

Damit wird das mittlere Dichtungssegment 4 beim Verschwenken des Verdeckgestänges 2 bzw. beim Verschwenken des vorderen Hilfslenkers 10 gegenüber dem Steuerlenker 15 nicht nur in einer Richtung entlang der Fahrzeuglängsachse und der Fahrzeughochachse bewegt, d. h. parallel zum Steuerlenker 15, sondern auch um eine vertikale Achse, so dass z. B. das hinteren Ende des mittleren Dichtungssegments 4 sich von dem Steuerlenker 15 entfernt bzw. an diesen annähert.

Das hintere Dichtungssegment 5 ist in der Nähe seines dem mittleren Dichtungssegment 4 benachbarten Endes an der Hauptsäule 7 in einem Gelenk 31 schwenkbar gelagert und an seinem gegenüberliegenden, dem Hauptlager 8 benachbarten Ende mittels einer z. B. schlitzförmigen Führung 32 gegenüber einem an der Hauptsäule 7 angebrachten Lagerelement 33, z. B. ein in der schlitzförmigen Führung aufgenommener Stift, derart verstellbar gelagert, dass der hintere Abschnitt des hinteren Dichtungssegments 5 in Dachquerrichtung relativ zur Hauptsäule 7 verstellbar ist und dabei um die vom Gelenk 31 definierte Schwenkachse 31' verschwenkt, die den Mittelpunkt der kreisabschnittsförmig gebildeten Führung 32 bildet. Die Steuerung der Verstellbewegung des hinteren Dichtungssegments 5 erfolgt über einen Koppelhebel 34, der das bei geschlossenem Faltverdeck von der Hauptsäule 7 entfernt angeordnete Ende während der Öffnungsbewegung des Faltverdecks gegen die Hauptsäule 7 in eine platzsparende Stellung verstellt.

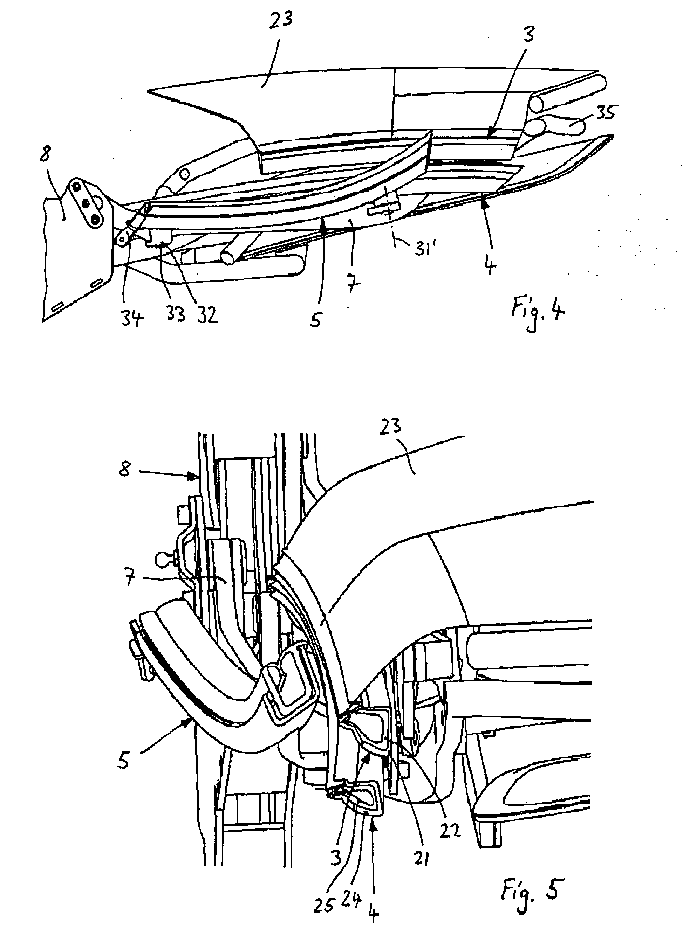

Bei der Bewegung des Faltverdecks 1 bzw. des Verdeckgestänges 2 aus der Schließstellung (Fig. 1) in die offene Ablagestellung (Fig. 4 und 5) wird z. B. die Hauptsäule 7 über eine Antriebseinrichtung verschwenkt, wodurch das mittlere Dachrahmenteil 9 in bekannter Parallelverschwenkbewegung in den Verdeckkasten bewegt wird. Beim Verschwenken des Hauptviergelenks zieht die Verlängerung der Hauptsäule 7 den Steuerlenker 15 relativ zum mittleren Dachrahmenteil 9 nach hinten, so dass der Steuerlenker 15 wiederum den hinteren Hilfslenker 11 um sein unteres Gelenk 18 nach hinten verschwenkt. Der nach hinten verschwenkende hintere Hilfslenker 11 verschwenkt über das Hilfsviergelenk das Dachvorderteil 23 nach hinten in Richtung zu einem Hauptspriegel 35 des Verdeckgestänges 2 oder über ihn, wobei der Verdeckstoff zumindest vor dem Hauptspriegel 35 entspannt wird. In der Ablagestellung (Fig. 4 und 5) bildet das Dachvorderteil 23 eine gleichsinnig gekrümmte oder gleichbombierte Abdeckung des Verdeckgestells 2, so dass eine Verdeckklappe nicht erforderlich ist.

Bei der Bewegung des Verdecks aus der Schließstellung in die Ablagestellung ist aufgrund der Auslegung des das räumliche Koppelgetriebe bildenden Viergelenks das mittlere Dichtungssegment 4 relativ zum Steuerlenker 15 nach vome verlagert worden, während gleichzeitig das hintere Ende des mittleren Dichtungssegments 4 an den Steuerlenker 15 angenähert worden ist. Somit ist das mittlere Dichtungssegment 4 unterhalb des vorderen Dichtungssegments 3 angeordnet und sein hinteres Ende liegt in etwa unterhalb des hinteren Endes des vorderen. Dichtungssegments 3 (siehe Fig. 4 und 5).

Die Lagerung des mittleren Dichtungssegments 4 erfolgt in einfacher Weise und aufgrund des großen Abstandes zwischen dem vorderen Gelenk 26 und der Schwinge 27 positionsgenau und spielfrei. Auf aus dem Stand der Technik bekannte Kugelgelenklagerungen als Schwenklagerung des Dichtungssegments kann verzichtet werden,

### Bezugszeichenliste

- 1: Faltverdeck
- 2: Verdeckgestänge
- 3: vorderes Dichtungssegment
- 4: mittleres Dichtungssegment
- 5: hinteres Dichtungssegment
- 6: Hauptlenker
- 7: Hauptsäule
- 8: Hauptlager
- 9: mittleres Dachrahmenteil
- 10: vorderer Hilfslenker
- 11: hinterer Hilfslenker
- 12: vorderes Dachrahmenteil
- 13: Gelenk
- 14: Gelenk
- 15: Steuerlenker
- 16: Gelenk
- 17: Gelenk
- 18: Gelenk
- 19: Gelenk
- 20: Gelenk
- 21: Dichtungsträger
- 22: Dichtprofil
- 23: Dachvorderteil
- 24: Dichtprofil .
- 25: Dichtungsträger
- 26: Gelenk
- 27: Schwinge
- 28: Gelenk
- 29: Gelenk
- 30: Schnittpunkt
- 31: Gelenk
- 31': Schwenkachse
- 32: Führung
- 33: Lagerelement
- 34: Koppelhebel
- 35: Hauptspriegel

## Patentansprüche

1. Faltverdeck für Kraftfahrzeuge mit einem an der Karosserie schwenkbar gelagerten Verdeckgestänge, das beidseits jeweils mehrere miteinander gelenkig verbundene seitliche Gestängeteile und daran angebrachte Dichtungssegmente aufweist, wobei zumindest ein Dichtungssegment an einem Gestängeteil bewegbar gelagert und beim Verstellen des Faltverdecks zwischen der Schließstellung und der Ablagestellung relativ zu dem Gestängeteil verstellbar ist,
**dadurch gekennzeichnet,**
**dass** das Dichtungssegment (4) mittels eines räumlichen Koppelgetriebes (16, 26, 28, 29) an dem Gestängeteil (15) bewegbar gelagert und bezüglich des Gestängeteils (15) in einer dreidimensionalen Bewegung geführt ist.

2. Faltverdeck nach Anspruch 1,
**dadurch gekennzeichnet, dass** das räumliche Koppelgetriebe ein Viergelenk (16, 26, 28, 29) umfasst.

3. Faltverdeck nach Anspruch 1 oder 2,
**dadurch gekennzeichnet, dass** das räumliche Koppelgetriebe bzw. das Viergelenk (16, 26, 28, 29) zur Lagerung des Dichtungssegments (4) zwei Lenker (10, 27) aufweist und dass einer der Lenker (10, 27) ein beim Verschwenken des Faltverdecks bewegter Lenker (10) des Verdeckgestänges (2) ist.

4. Faltverdeck nach einem der Ansprüche 1 bis 3,
**dadurch gekennzeichnet, dass** die Schwenkachsen (16', 26', 28', 29') der vier Gelenke (16, 26, 28,29) des Viergelenks einen gemeinsamen Schnittpunkt (30) aufweisen.

5. Faltverdeck nach einem der Ansprüche 1 bis 4,
**dadurch gekennzeichnet, dass** ein Hinterende des Dichtungselements (4) beim Ablegen des Faltverdecks eine einwärts gegen das Gestängeteil (15) gerichtete Bewegung ausführt.

6. Faltverdeck nach einem der Ansprüche 1 bis 5,
**dadurch gekennzeichnet, dass** das Dichtungselement ein mittleres Dichtungselement (4) an einem jeweils drei seitliche Dichtungselemente (2, 3, 4) aufweisenden Verdeckgestänge (2) bzw. Faltverdeck ist.

7. Faltverdeck nach Anspruch 6,
**dadurch gekennzeichnet, dass** das hintere Dichtungselement (5) an einer Hauptsäule (7) des Verdeckgestänges (2) bewegbar gelagert ist.

8. Faltverdeck nach einem der Ansprüche 1 bis 7,
**dadurch gekennzeichnet, dass** jedes Dichtungselement (3, 4, 5) einen Dichtungsträger mit einem daran gelagerten Dichtprofil aufweist.
